Europäisches Patentamt

European Patent Office

Office européen des brevets

(11) Veröffentlichungsnummer: **0 233 361**
**A2**

# (12) EUROPÄISCHE PATENTANMELDUNG

(21) Anmeldenummer: 86117706.1

(22) Anmeldetag: 18.12.86

(51) Int. Cl.⁴: **A45C 5/00** , A45C 13/24

(30) Priorität: 20.12.85 DE 3545179

(43) Veröffentlichungstag der Anmeldung:
26.08.87 Patentblatt 87/35

(84) Benannte Vertragsstaaten:
AT BE CH DE ES FR GB GR IT LI LU NL SE

(71) Anmelder: **Kleeberg, Kay**
**Wilhelmistrasse 12**
**D-2000 Hamburg 52(DE)**

(72) Erfinder: **Kleeberg, Kay**
**Wilhelmistrasse 12**
**D-2000 Hamburg 52(DE)**

(74) Vertreter: **Heldt, Gert, Dr. Dipl.-Ing.**
**Neuer Wall 59 III**
**D-2000 Hamburg 36(DE)**

(54) Behältnis.

(57) Das Behältnis zum Transport unterhaltungselektronischer Geräte ist allseits von wärmeisolierten Wandungen umgeben. Die Wandungen bestehen aus Kunststoff, der mit einer Wärmeisolation versehen ist. Insbesondere ist eine Wärmeisolation aus Styropor vorgesehen. Das unterhaltungselektronische Gerät ist als tragbares Cassettengerät ausgebiltet und einem Innenraum des Behältnisses angeordnet. In mindestens einer der den Innenraum umgebenden Wandungen ist mindestens ein Lautsprecher befestigt, der mit dem Cassettengerät elektrisch verbunden ist. Der schallabgebende Schalltrichter des Lautsprechers schließt mit einer dem Innenraum abgewandten äußeren Oberfläche mit einer der Wandungen ab.

EP 0 233 361 A2

# Behältnis

Die Erfindung betrifft ein Behältnis zum Transport unterhaltungselektronischer Geräte, die allseits von Wandungen umgeben sind.

Derartige Behältnisse werden beispielsweise zur Aufnahme von tragbaren Cassettengeräten, sogenannten Walk-man, benutzt. Sie sind als Tragetaschen ausgebildet, die ein Benutzer an einem Trageriemen über seiner Schulter trägt. Das Behältnis besteht aus mehr oder minder flexiblem Kunststoff oder Leder, es umschließt das Gerät allseitig und weist lediglich Anschlußbuchsen auf, in die Steckkontakte von Kopfhörern hineingesteckt werden können. Der Nachteil derartiger Behältnisse besteht darin, daß das in seinem Inneren eingeschlossene Gerät weitgehend Umwelteinflüssen ausgesetzt ist. Die wenigsten dieser Behältnisse sind beispielsweise gegen Schmutz und Feuchtigkeit gesichert, die durch undichte Stellen in das Innere des Behältnisses eindringen können. Insbesondere liegen die mechanischen Teile des Gerätes weitgehend frei. Insbesondere sind die Schalter des Gerätes und der zum Einlegen der Cassette vorgesehene Einschub nicht abgedeckt, so daß Schmutz und Feuchtigkeit leicht eindringen können. Darüber hinaus besteht ein wesentlicher Nachteil darin, daß das Gerät erheblichen Temperaturbelastungen ausgesetzt ist, wenn es beispielsweise unter Sonneneinstrahlung benutzt wird. In seinem Inneren können Temperaturen auftreten, die geeignet sind, die Funktion des Gerätes in Frage zu stellen.

Aufgabe der vorliegenden Erfindung ist es daher, das Behältnis der einleitend genannten Art so zu verbessern, daß es geeignet ist, das in seinem Inneren eingeschlossene Gerät Umwelteinflüssen weitgehend zu entziehen.

Diese Aufgabe wird erfindungsgemäß dadurch gelöst, daß die Wandungen wärmeisoliert sind.

Eine derartige Wärmeisolation des Behältnisses sorgt dafür, daß in seinem Inneren ein möglichst gleichbleibende Temperatur herrscht, bei der das Gerät optimal arbeitet. Darüber hinaus sind die wärmeisolierten Wandungen auch gegen andere Einflüsse der Umwelt dicht. Beispielsweise können weder Feuchtigkeit noch Schmutz durch die wärmeisolierten Wandungen in das Innere des Gerätes eindringen. Auf diese Weise ist das Gerät weitgehend sicher gegen Störungen jedweder Art, die aus der Umwelt auf das Gerät einwirken können. Mit einer optimalen Betriebsbereitschaft des Gerätes kann gerechnet werden.

Gemäß einer bevorzugten Ausführungsform der Erfindung bestehen die Wandungen aus Kunststoff, der mit einer Wärmeisolation versehen ist. Ein derartiger Kunststoff kann relativ leicht und sicher zu einem Behältnis geformt werden, das weitgehend dicht gegen das Eindringen von Verunreinigungen ist. Darüber hinaus kann ein Kunststoff gewählt werden, der weitgehend temperaturunabhängig ist, so daß das Behältnis auch bei extremen Temperaturen dicht und sicher gegen Wärmeausdehnungen bzw. Kältekontraktionen ist. Schließlich läßt sich auf den Kunststoff sehr gut eine Wärmeisolation aufbringen, die im Regelfall ebenfalls aus Kunststoff besteht. Möglicherweise können die Wandungen aus Kunststoffplatten hergestellt werden, auf die bereits während ihrer Herstellung eine Wärmeisolation aufgebracht wird.

Weitere Einzelheiten der Erfindung ergeben sich aus der nachfolgenden ausführlichen Beschreibung und den beigefügten Zeichnungen, aus denen sich bevorzugte Ausführungsformen der Erfindung beispielsweise veranschaulichen lassen.

In den Zeichnungen zeigen:

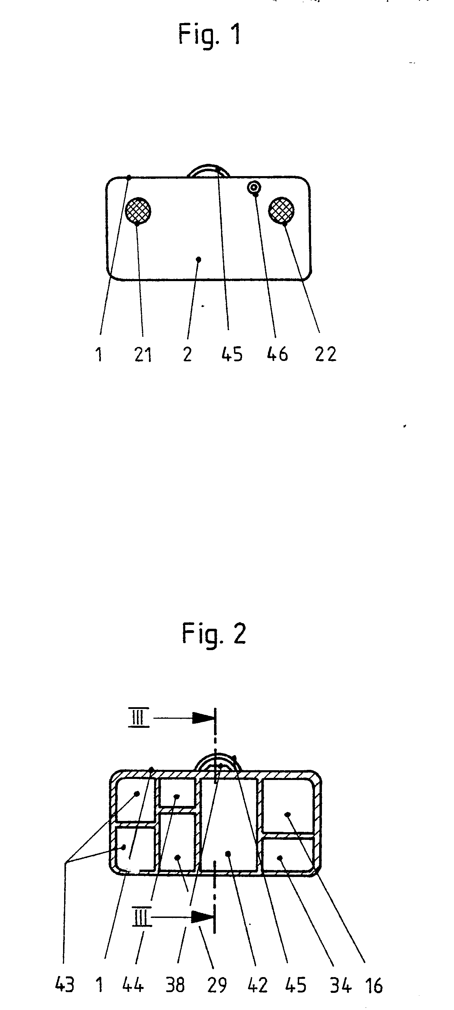

Fig. 1 : eine Seitenansicht eines Behältnisses,

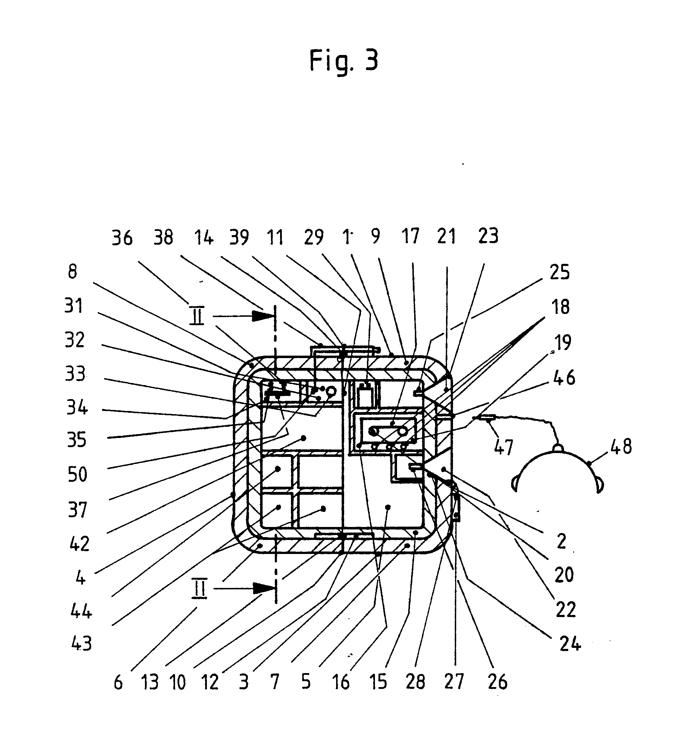

Fig. 2 : einen Längsschnitt durch ein Behältnis entsprechend der Schnittlinie II-II in Figur 3,

Fig. 3 : einen Querschnitt durch ein Behältnis entsprechend der Schnittlinie III-III in Figur 2,

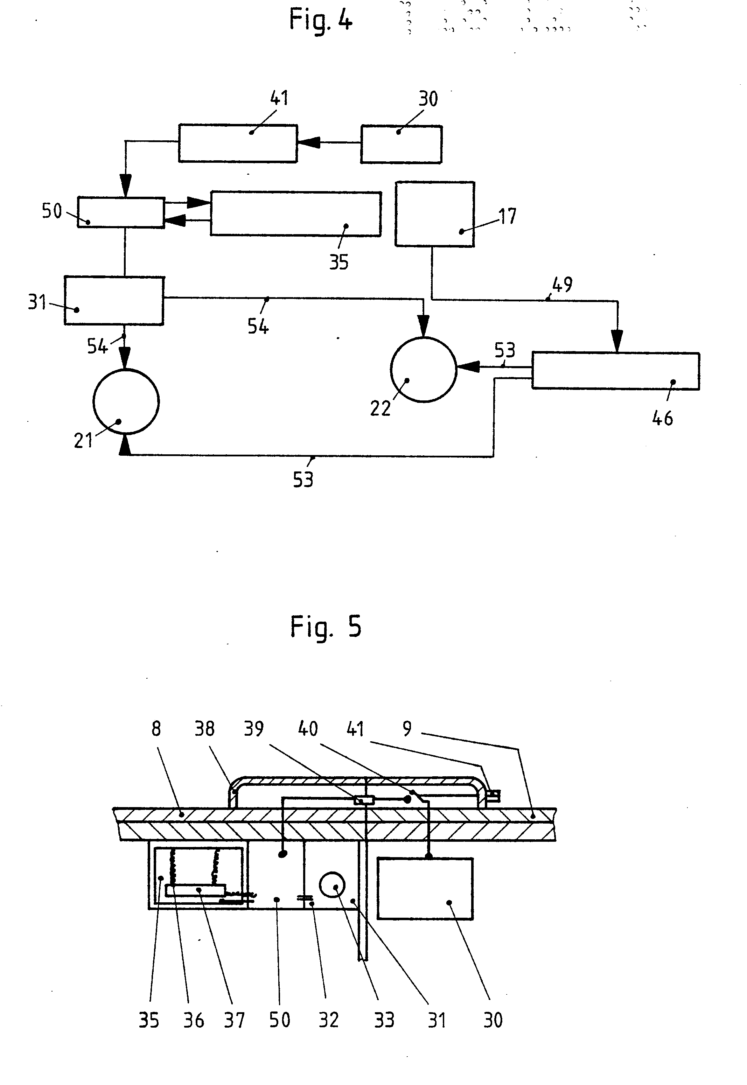

Fig. 4 : ein Schema eines Schaltplanes für die Verschaltung der im Behältnis enthaltenen Geräte und Schalter,

Fig. 5 : einen Querschnitt durch ein Schloß in vergrößerter Darstellung.

Ein Behältnis besteht im wesentlichen aus Wandungen 1, 2, 3, 4, die einen Innenraum 5 umgeben. Zwei einander gegenüberliegende Wandungen 1, 3 sind in zwei etwa gleich große Hälften 6, 7 bzw. 8, 9 durch Trennfugen 1o, 11 unterteilt. Im Bereich einer der unterteilten Wandungen 3 ist ein die beiden Hälften 6, 7 miteinander verbindendes Scharnier 12 vorgesehen, um dessen Drehachse 13 die beiden Hälften 6, 7 und damit sowohl die Wandungen 2, 4 als auch die beiden Hälften 8, 9 gegeneinander verschwenkbar gelagert sind.

Die dem Scharnier 12 gegenüberliegende Trennfuge 11 kann mit einem Dichtungsrezeß 14 versehen sein, so daß im geschlossenen Zustand die beiden Hälften 8, 9 gut schließend ineinander gefügt sind.

Auf den Wandungen 1, 2, 3, 4 ist in Richtung auf den Innenraum 5 eine Wärmeisolation 15 aufgebracht, die gleichzeitig als eine Polsterung der im Innenraum 5 untergebrachten Gegenstände ausgebildet sein kann. Diese Wärmeisolation erschwert einen Wärmedurchgang durch die Wandungen 1, 2, 3, 4.

Der Innenraum 5 ist in eine Vielzahl von Fächern unterteilt, von denen einige einer Zweckbestimmung zugeführt sind. In einem der Wandung 2 benachbarten Mittelfach 16 ist ein tragbares Cassettengerät 17 eingelegt, das über Bedienungsknöpfe 18 zu betätigen ist. Es besitzt Steckerbuchsen, in die Stecker zum Anschluß von Lautsprechern 21, 22 eingefügt werden können. Bei diesen Steckern kann es sich um genormte Stecker handeln. In das Cassettengerät 17 kann eine Cassette 19 eingelegt werden, auf dessen Tonband 2o akustische oder visuelle Aufzeichnungen enthalten sind. Diese können vom Cassettengerät 17 abgespielt werden.

Zu diesem Zwecke sind in der Wandung 2 Lautsprecher 21, 22 vorgesehen, die fest mit der Wandung 2 verbunden sind. Sie ragen mit ihren Schalltrichtern 23, 24 in einer vom Innenraum 5 abgewandten Richtung aus der Wandung 2 heraus. Ihre elektrischen Anschlüsse 25, 26 sind im Innenraum 5 vorgesehen und elektrisch mit dem Cassettengerät 17 verbunden. Die elektrische Verbindung kann aus einer Steckerverbindung bestehen, die mit einem Stecker in eine am Cassettengerät 17 vorgesehene Steckerbuchse hineingesteckt ist. Zum Schutze gegen Verunreinigungen ist auf der Wandung 2 eine schwenkbare Klappe 27 angeordnet, die um eine Schwenkachse 28 verschwenkt werden kann, so daß sie den Schalltrichter 24 abdeckt. Für den Schalltrichter 23 ist eine ähnliche Klappe vorgesehen, aber nicht dargestellt.

Im bereich der Wandung 1 ist unmittelbar dem Cassettengerät 17 benachbart ein Batteriefach 29 vorgesehen, in das eine Batterie 3o eingepaßt ist. Diese Batterie 3o ist elektrisch gegebenenfalls mit Verstärkern verbunden, die im Innenraum 5 untergebracht sein können. Diese sind mit den Lautsprechern 21, 22 verschaltet. Darüber hinaus dient die Batterie 3o im wesentlichen der Speisung einer Warnschaltung 51, die dazu dient, einen Diebstahl des Behältnisses zu verhindern.

Unmittelbar neben dem Batteriefach 29 ist im Bereich der Wandung 1 eine Warneinrichtung 31 in einem an der Hälfte 8 der Seite 1 befestigten Fach 32 untergebracht. Die Warneinrichtung 31 besteht im wesentlichen aus einer Signalschaltung, mit der ein Warngeber 33 verbunden ist. Dieser kann als Schallquelle in Form einer Sirene ausgebildet sein. Es ist jedoch auch möglich, eine starke Lampe als Lichtquelle zu benutzen, die durch die Wandung 1 aus dem Innenraum 5 herausragt und beispielsweise durch ständiges Aufleuchten und Abblenden auf sich aufmerksam macht. Schließlich ist es denkbar, eine Schallquelle mit einer Lichtquelle zu kombinieren.

In einem unmittelbar neben dem Fach 32 vorgesehenen Außenfach 34 kann ein Erschütterungsgeber 35 angeordnet sein, der beispielsweise einen an Federn 36 aufgehängten elektrischen Kontakt 37 aufweist. Sobald das Behältnis ergriffen wird, gerät der elektrische Kontakt 37 an den Federn 36 in Schwingungen und löst dabei Stromstöße aus, die geeignet sind, ein Relais 5o auszulösen. Dieses ist einerseits mit dem Erschütterungsgeber 35 und andererseits mit der Warneinrichtung 31 verbunden. Sobald der Erschütterungsgeber 35 durch eine Erschütterung erregt wird, schaltet er das Relais 5o, das im Anschluß daran die Warneinrichtung 31 mit dem Strom der Batterie 3o versorgt.

Zwischen den beiden Hälften 8, 9 der Wandung 1 ist ein Schloß 38 vorgesehen, mit dessen Hilfe die beiden Hälften 8, 9 gegeneinander verriegelt werden können. Zu diesem Zwecke befindet sich innerhalb des Schlosses 38 ein Verriegelungsstift 39, der als elektrischer Kontakt ausgebildet ist. Er verbindet den Warngeber 33 einerseits über das Relais 50 mit der Batterie 3o andererseits. Sobald das Schloß 38 geschlossen ist, kommt zwischen der Batterie 3o und dem Warngeber 33 ein elektrischer Kontakt zustande. Dieser verursacht ein Warnsignal des Warngebers 33, sobald unbefugt versucht wird, das Schloß 38 zu öffnen.

Zu diesem Zwecke ist zwischen dem Verriegelungsstift 39 und der Batterie 3o ein im Schloß 38 angeordneter Schalter 4o vorgesehen, mit dessen Hilfe die Batterie 3o mit dem Verriegelungsstift 39 elektrisch verbunden werden kann. Dieser Schalter 4o kann ausschließlich mit einem zu seiner Betätigung vorgesehenen Schlüssel 41 geöffnet bzw. geschlossen werden. Nachdem mit Hilfe des Schlüssel 41 der Schalter 4o geschlossen ist, ist die Warneinrichtung 31 elektrisch mit der Batterie 3o verbunden, soweit der Verriegelungsstift 39 die Verriegelung des Schlosses 38 anzeigt. Sobald in diesem Zustand das Behältnis unzulässigerweise ergriffen wird, gibt der Erschütterungsgeber 35 Kontakt, der das Relais 5o auslöst. Das Relais 5o verbindet daraufhin die Warneinrichtung 31 über den Schalter 4o mit der Batterie 3o. In diesem Zustand gibt der Warngeber 33 ein Signal ab, so daß auf diese Weise bekannt wird, daß das Behältnis unzulässigerweise bewegt wird.

In Richtung auf die Wandung 3 erstreckt sich unterhalb des Außenfaches 34 ein Aufbewahrungsfach 42, in dem Gegenstände des täglichen Lebens aufbewahrt werden können. Dieses Aufbewahrungsfach 42 wird insbesondere zur Aufnahme von Kleidungsstücken benutzt, die beim Baden abgelegt werden, so lange ihre Träger im Wasser sind.

Darüber hinaus kann der kühlende Innenraum 5 auch zur Aufbewahrung von Behältern 43 dienen, die Getränke enthalten. Diese Getränke werden im Innenraum 5 kühl gehalten.

Schließlich können im Innenraum 5 auch in einem besonderen Wertfach 44 Wertgegenstände aufbewahrt werden. Auch diese Funktion des Bahältnisses kommt seiner Funktion als Freizeitartikel sehr weitgehend entgegen.

Das Behältnis wird an seiner der Wandung 1 zugewandten Oberseite an einem Griff 45 erfaßt und kann auf diese Weise über größere Entfernungen transportiert werden. Es ist jedoch auch möglich, beliebige andere Aufhänger, beispielsweise für einen Schulterriemen, zu wählen, um das Behältnis zu transportieren.

An einem dafür vorgesehenen Ort wird das Schloß 38 geöffnet und die Hälften 6, 7 bzw. 8, 9 mit den sie verbindenden Wandungen 2, 4 um die Drehachse 13 verschwenkt. Dadurch wird der Innenraum 5 zugänglich. Sodann wird mit Hilfe der Bedienungsknöpfe 18 das Cassettengerät 17 in Betrieb genommen. Die beim Abspielen des Tonbandes 2o entstehenden elektrischen Signale werden über eine am Cassettengerät 17 über eine Steckerverbindung lösbare Verbindung 49 auf die Lautsprecher 21, 22 gesteuert. Nachdem von deren Schalltrichter 23, 24 die Klappen 27 entfernt worden sind, strahlen die Lautsprecher 21, 22 das vom Tonband 2o abgespielte Programm ab.

Darüber hinaus kann das Cassettengerät 17 mit einem Kopfhöreranschluß 46 verbunden werden. Dieser Kopfhöreranschluß 46 ist zur Aufnahme eines Steckers 47 geeignet, der elektrisch mit einem Kopfhörer 48 verbunden ist. Je nach Wunsch kann das vom Tonband 2o abgespielte Programm von den Lautsprechern 21, 22 bzw. dem Kopfhörer 48 abgenommen werden. Zu diesem Zwecke kann der Kopfhöreranschluß 46 mit einem Unterbrecher versehen sein. Dieser unterbricht den Kontakt zu den Lautsprechern 21, 22, solange der Kopfhörer 48 elektrisch mit dem Cassettengerät 17 verbunden ist. Sobald der Kopfhöreranschluß 46 durch Herausziehen des Steckers 47 unterbrochen wird, sind über Zuleitungen 53 die Lautsprecher 21, 22 mit dem Cassettengerät 17 verbunden.

Zur Verhinderung eines Diebstahls wird das Behältnis geschlossen, so daß das Schloß 38 mit Hilfe des Verriegelungsstiftes 39 verriegelt wird. Der Verriegelungsstift 39 stellt einen Kontakt zwischen der Batterie 3o und dem Warngeber 33 her, sobald der Schalter 4o geschlossen wird. Dieser Schalter 4o wird mit Hilfe des Schlüssels 41 bedient. Es ist jedoch auch möglich, den Schalter 4o mit Hilfe eines nicht dargestellten Kombinationsschlosses zu bedienen, so daß er nur bei einer geheim gehaltenen Kombination geöffnet werden kann. Im geschlossenen Zustand des Schalters 4o ist die Batterie 3o über das Relais 5o mit der Warneinrichtung 31 verbunden. Sobald das Relais 5o von dem mit ihm verbundenen Erschütterungsgeber 35 geschlossen wird, erhält die Warneinrichtung 31 Spannung und betätigt den Warngeber 33. Darüber hinaus ist die Warneinrichtung 31 mit den Lautsprechern 21, 22 über Leitungen 54 verbunden, so daß diese entsprechend dem von der Warneinrichtung 31 abgegebenen Strom erregt werden und entsprechend ihrer Erregung Töne über ihre Schalltrichter 23, 24 abstrahlen. Auf diese Weise ist das Behältnis gegen Diebstahl gesichert. Diese Sicherung kann erst dann gelöst werden, wenn mit Hilfe des Schlüssels 41 der Schalter 4o geöffnet wird.

Zum Transport des Behältnisses wird der Schalter 4o durch den Schlüssel 41 betätigt, so daß der Kontakt zwischen der Batterie 3o und der Warneinrichtung 31 unterbrochen wird. Nunmehr kann das Behältnis am Griff 45 erfaßt und transportiert werden, ohne daß die Warneinrichtung 31 ein Signal abgibt. Die Unterteilung des Innenraumes 5 kann auch nach anderen als den hier beschriebenen Gesichtspunkten erfolgen. Beispielsweise können weitere Anschlüsse vorgesehen sein, mit deren Hilfe das Cassettengerät 17 und damit die Lautsprecher 21, 22 an eine Netzversorgung angeschlossen werden. Darüber hinaus können auch weitere Steckkontakte vorgesehen werden, mit deren Hilfe außerhalb des Behältnisses vorgesehene Lautsprecherboxen mit dem Cassettengerät 17 verbunden werden können.

**Ansprüche**

1.      Behältnis      zum      Transport unterhaltungselektronischer Geräte, die allseits von Wandungen umgeben sind, dadurch gekennzeichnet, daß die Wandungen (1, 2, 3, 4) wärmeisoliert sind.

2. Behältnis nach Anspruch 1, dadurch gekennzeichnet, daß die Wandungen (1, 2, 3, 4) aus Kunststoff bestehen, der mit einer Wärmeisolation (15) versehen ist.

3. Behältnis nach Anspruch 1 und 2, dadurch gekennzeichnet, daß die Wärmeisolation (15) aus Styropor besteht.

4. Behältnis nach Anspruch 1 bis 3, dadurch gekennzeichnet, daß das unterhaltungselektronische Gerät als tragbares Cassettengerät (17) ausgebildet ist.

5. Behältnis nach Anspruch 1 bis 4, dadurch gekennzeichnet, daß in mindestens einer der Wandungen (1, 2, 3, 4) mindestens ein Lautsprecher - (21, 22) befestigt ist, der in einem von den Wandungen (1, 2, 3, 4) umschlossenen Innenraum (5) mit dem Cassettengerät (17) elektrisch verbunden ist und dessen tonabgebender Schalltrichter (23, 24) mit einer dem Innenraum (5) abgewandten äußeren Oberfläche der Wandung (2) abschließt.

6. Behältnis nach Anspruch 5, dadurch gekennzeichnet, daß zwischen dem Cassettengerät (17) und dem Lautsprecher (21, 22) eine lösbare elektrische Verbindung vorgesehen ist.

7. Behältnis nach Anspruch 1 bis 6, dadurch gekennzeichnet, daß zwischen dem Lautsprecher - (21, 22) und dem Cassettengerät (17) ein Anschluß (46) für einen Kopfhörer (48) vorgesehen ist.

8. Behältnis nach Anspruch 7, dadurch gekennzeichnet, daß zwischen dem Anschluß (46) für den Kopfhörer (48) und dem Cassettengerät (17) eine lösbare elektrische Verbindung (49) vorgesehen ist.

9. Behältnis nach Anspruch 1 bis 8, dadurch gekennzeichnet, daß in mindestens einer Wandung (1, 2, 3, 4) ein Anschluß (46) für einen Kopfhörer (48) befestigt ist, der in der äußeren Oberfläche der Wandung (2) mündet.

1o. Behältnis nach Anspruch 1 bis 9, dadurch gekennzeichnet, daß der Lautsprecher (21, 22) an der äußeren Oberfläche der Wandung (2) von einer abnehmbaren Klappe (27) staubdicht verschlossen ist.

11. Behältnis nach Anspruch 1 bis 1o, dadurch gekennzeichnet, daß der Anschluß (46) für einen Kopfhörer (48) auf der äußeren Oberfläche der Wandung (2) von einem abnehmbaren Verschluß staubdicht verschlossen ist.

12. Behältnis nach Anspruch 1 bis 11, dadurch gekennzeichnet, daß mindestens zwei Wandungen (2, 4) verschwenkbar gegeneinander gelagert sind und in einer ersten Schwenkstellung der Innenraum (5) geöffnet und in einer zweiten Schwenkstellung der Innenraum (5) geöffnet ist.

13. Behältnis nach Anspruch 1 bis 12, dadurch gekennzeichnet, daß mit einer der beiden verschwenkbaren Wandungen (2, 4) die den Innenraum (5) bildenden übrigen Wandungen (1, 2) verbunden sind, zwischen denen und der anderen verschwenkbaren Wandung eine gasdichte Dichtung vorgesehen ist.

14. Behältnis nach Anspruch 1 bis 13, dadurch gekennzeichnet, daß im Bereich der Dichtung mindestens ein den Innenraum (5) verschließendes Schloß (38) vorgesehen ist.

15. Behältnis nach Anspruch 1 bis 14, dadurch gekennzeichnet, daß in dem Schloß (38) ein bei geschlossenem Innenraum (5) geschlossener Kontakt vorgesehen ist, der in Form eines Verriegelungsstiftes (39) ausgebildet ist.

16. Behältnis nach Anspruch 1 bis 15, dadurch gekennzeichnet, daß der Kontakt mit einer Warneinrichtung (31) über eine Stromquelle verbunden ist, die im Innenraum (5) angeordnet ist.

17. Behältnis nach Anspruch 1 bis 16, dadurch gekennzeichnet, daß zwischen dem Kontakt und der Wareneinrichtung (31) ein Relais (5o) angeordnet ist.

18. Behältnis nach Anspruch 1 bis 17, dadurch gekennzeichnet, daß mit der Warneinrichtung (31) ein bei Erschütterungen schließender Kontakt (37) verbunden ist.

19. Behältnis nach Anspruch 1 bis 17, dadurch gekennzeichnet, daß der bei Erschütterungen - schließende Kontakt (37) auf das Relais (5o) geschaltet ist.

2o. Behältnis nach Anspruch 1 bis 19, dadurch gekennzeichnet, daß der Erschütterungskontakt - (37) mit einem geheimen Einschalter elektrisch verbunden ist.

21. Behältnis nach Anspruch 1 bis 2o, dadurch gekennzeichnet, daß der geheime Einschalter mit einem Einschaltschloß mechanisch gekoppelt ist.

22. Behältnis nach Anspruch 1 bis 21, dadurch gekennzeichnet, daß das Einschaltschloß als Kombinationsschloß ausgebildet ist.

23. Behältnis nach Anspruch 1 bis 22, dadurch gekennzeichnet, daß der Erschütterungskontakt - (37) an das Relais (5o) parallel zum Schloß (38) geschaltet ist.

24. Behältnis nach Anspruch 1 bis 23, dadurch gekennzeichnet, daß der Lautsprecher (21, 22) über die Warneinrichtung (31) mit der Stromquelle verbunden ist.

25. Behältnis nach Anspruch 1 bis 24, dadurch gekennzeichnet, daß das Cassettengerät (17) mit dem Lautsprecher (21, 22) einen von der Warneinrichtung (31) unabhängigen Schaltkreis bildet.

26. Behältnis nach Anspruch 1 bis 25, dadurch gekennzeichnet, daß der Anschluß (46) für den Kopfhörer (48) in dem von dem Cassettengerät - (17) und dem Lautsprecher (21, 22) gebildeten Stromkreis liegt.

27. Behältnis nach Anspruch 1 bis 26, dadurch gekennzeichnet, daß am Anschluß (46) für den Kopfhörer (48) ein bei eingeschaltetem Lautsprecher (21, 22) betätigter Unterbrecher liegt.

28. Behältnis nach Anspruch 1 bis 27, dadurch gekennzeichnet, daß der von dem Cassettengerät - (17), dem Anschluß (46) für den Kopfhörer (48) und dem Lautsprecher (21, 22) gebildete Stromkreis über eine lösbare Verbindung mit dem Cassettengerät (17) verbunden ist.

29. Behältnis nach Anspruch 1 bis 28, dadurch gekennzeichnet, daß im Innenraum (5) Fächer (44) für aufzubewahrende Gegenstände vorgesehen sind.

3o. Behältnis nach Anspruch 1 bis 28, dadurch gekennzeichnet, daß im Innenraum (5) ein Fach für mit Getränken gefüllte Behälter (43) vorgesehen ist.

31. Behältnis nach Anspruch 1 bis 3o, dadurch gekennzeichnet, daß auf einer seiner Wandungen - (1, 2, 3, 4) Kontakte zur Aufnahme einer Netzversorgung vorgesehen sind.

32. Behältnis nach Anspruch 1 bis 31, dadurch gekennzeichnet, daß der Lautsprecher (21, 22) mit einem Verstärker versehen ist, der mit der Stromquelle elektrisch verbunden ist.

33. Behältnis nach Anspruch 1 bis 31, dadurch gekennzeichnet, daß der Lautsprecher (21, 22) als eine Aktivbox mit eigenem Verstärker ausgebildet ist.

34. Behältnis nach Anspruch 1 bis 33, dadurch gekennzeichnet, daß der Schlüssel (41) mit einem wasserfesten Befestigungsband versehen ist.

## Fig. 1

1    21    2    45    46    22

## Fig. 2

III

III

43   1   44    38    29    42    45    34   16

## Fig. 3

0 233 361

## Fig. 4

## Fig. 5